# EUROPEAN PATENT APPLICATION

(11) **EP 1 645 607 A1**
(43) Date of publication of application: **12.04.2006**
(21) Application number: 04256152.2
(22) Date of filing: 05.10.2004
(51) Int. Cl.: C09J 5/06, B44C 1/18, A41D 27/08, G09F 3/10, B29C 65/48, B29K 83/00

(54) **Method for preparing a logo label**

(71) Applicant: Liu, Kun-Chung, Hou-Li Hsiang, Taichung Hsien (TW)
(72) Inventor: Liu, Kun-Chung, Hou-Li Hsiang, Taichung Hsien (TW)
(74) Representative: Skone James, Robert Edmund

(57) **Abstract**

A method for preparing a logo label (40) includes the steps of: (a) preparing a fabric substrate (10); (b) forming a curable thermosetting resin layer (20) that contains a curing agent on the fabric substrate (10); (c) pre-curing the curable thermosetting resin layer (20) to an extent that only a portion of the curing agent undergoes a cross-linking reaction and that the curable thermosetting resin layer (20) forms a cured barrier integral with the fabric substrate (10); (d) attaching a logo pattern unit (30) including a curable thermosetting resin to the curable thermosetting resin layer (20) ; and (e) heating the curable thermosetting resin layer (20) and the logo pattern unit (30) to cause the remainder of the curing agent to undergo a cross-linking reaction with the curable thermosetting resin of the logo pattern unit (30).

## Description

This invention relates to a method for preparing a logo label, particularly to a method for preparing a logo label including a fabric substrate.

Logo labels are commonly made from polyvinyl chloride (PVC) plastics. Although such PVC labels have good adhesiveness to other materials, a stabilizer is required to be added into the PVC plastics. The stabilizer contains a heavy metal, such as cadmium, barium or lead, which can cause environmental pollution. Therefore, the total amount of polyvinyl chloride plastics used is strictly governed by Environmental Law in most counties.

In view of the abovementioned environmental concern, silicone rubbers have been developed as materials for manufacturing the logo labels. However, the thus formed logo labels are difficult to be adhesively attached to other materials or articles through application of an adhesive agent because the silicone rubbers contain silicone oil that is a releasing agent itself. Conventionally, the logo label made from silicone rubbers is attached to an article by sewing. Nevertheless, the logo label tends to be damaged during the sewing operation and is difficult to be processed further. In addition, articles available for sewing with such labels are restricted. For example, metal or hard materials are not suitable for sewing with such labels. Consequently, application of the logo label made from silicone rubbers is limited.

Therefore, the object of the present invention is to provide a method for preparing a logo label that can overcome the aforesaid drawbacks of the prior art.

According to the present invention, a method for preparing a logo label includes the steps of: (a) preparing a fabric substrate; (b) forming a curable thermosetting resin layer that contains a curing agent on the fabric substrate; (c) pre-curing the curable thermosetting resin layer to an extent that only a portion of the curing agent undergoes a cross-linking reaction and that the curable thermosetting resin layer forms a cured barrier integral with the fabric substrate; (d) attaching a logo pattern unit which includes a curable thermosetting resin to the curable thermosetting resin layer; and (e) heating the curable thermosetting resin layer and the logo pattern unit to cause the remainder of the curing agent to undergo a cross-linking reaction with the curable thermosetting resin of the logo pattern unit so as to bind the logo pattern unit to the fabric substrate through the curable thermosetting resin layer.

Other features and advantages of the present invention will become apparent in the following detailed description of the preferred embodiments of this invention, with reference to the accompanying drawings, in which:
Fig. 1 is a flow diagram to illustrate consecutive steps of the first preferred embodiment of a method for preparing a logo label according to the present invention;
Fig. 2 is a schematic cross-sectional view to illustrate how a curable thermosetting resin layer is formed on a fabric substrate in the first preferred embodiment of the present invention;
Fig. 3 is a schematic cross-sectional view to illustrate how the curable thermosetting resin layer formed in Fig. 2 is pre-cured and forms a cured barrier integral with the fabric substrate in the first preferred embodiment of the present invention;
Fig. 4 is a schematic cross-sectional view to illustrate how a logo pattern unit is attached to the curable thermosetting resin layer formed in Fig. 2 and is bound to the fabric substrate;
Fig. 5 is a schematic cross-sectional view to illustrate the resultant logo label obtained from the first preferred embodiment of the present invention;
Fig. 6 is a schematic cross-sectional view to illustrate how a curable thermosetting resin layer is formed on a fabric substrate in the second preferred embodiment of a method for preparing a logo label according to the present invention; and
Fig. 7 is a schematic cross-sectional view to illustrate how a logo pattern unit is attached to the curable thermosetting resin layer formed in Fig. 6 and is bound to the fabric substrate in the second preferred embodiment of the present invention.

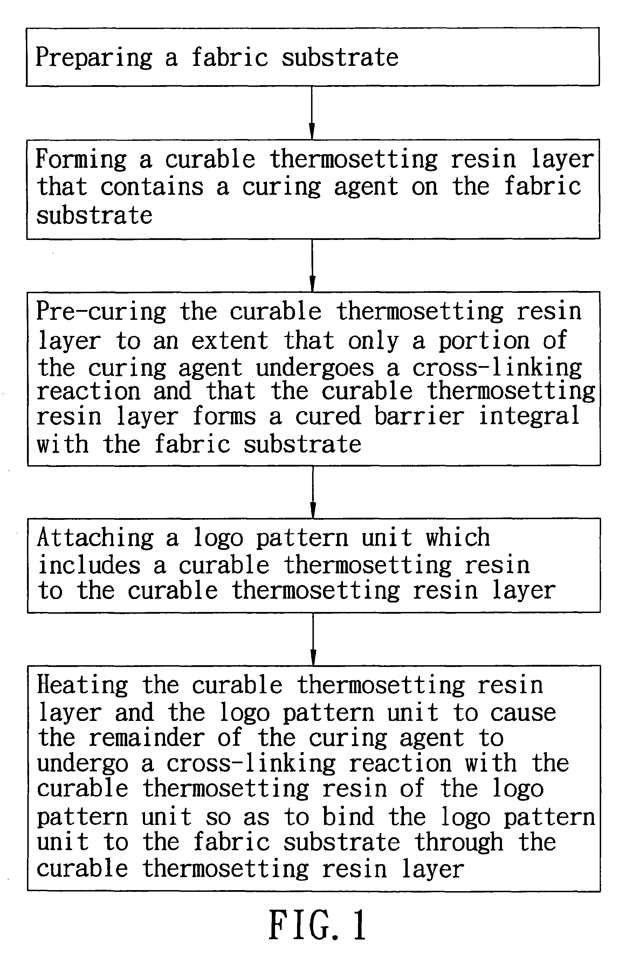

Referring to Fig. 1, a method for preparing a logo label according to the present invention includes the steps of: preparing a fabric substrate; forming a curable thermosetting resin layer that contains a curing agent on the fabric substrate; pre-curing the curable thermosetting resin layer to an extent that only a portion of the curing agent undergoes a cross-linking reaction and that the curable thermosetting resin layer forms a cured barrier integral with the fabric substrate; attaching a logo pattern unit which includes a curable thermosetting resin to the curable thermosetting resin layer; and heating the curable thermosetting resin layer and the logo pattern unit to cause the remainder of the curing agent to undergo a cross-linking reaction with the curable thermosetting resin of the logo pattern unit so as to bind the logo pattern unit to the fabric substrate through the curable thermosetting resin layer.

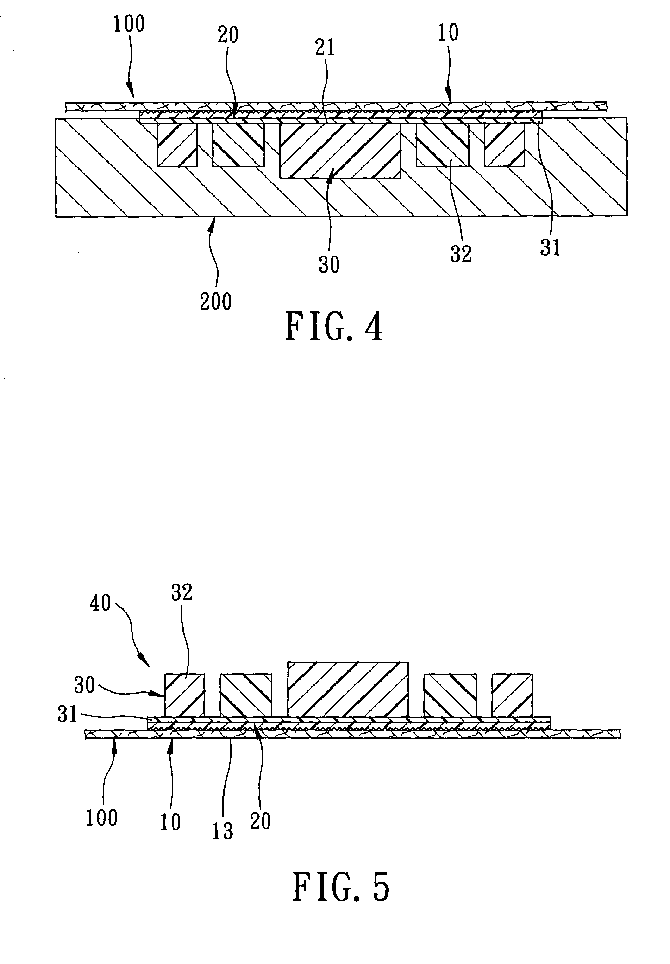

Fig. 5 illustrates the logo label 40 prepared according to the method of this invention. The logo label 40 includes a fabric substrate 10, a curable thermosetting resin layer 20 formed on the fabric substrate 10, and a logo pattern unit 30 that includes a backing substrate 31 bound to the curable thermosetting resin layer 20, and logo pieces 32 bound to the backing substrate 31.

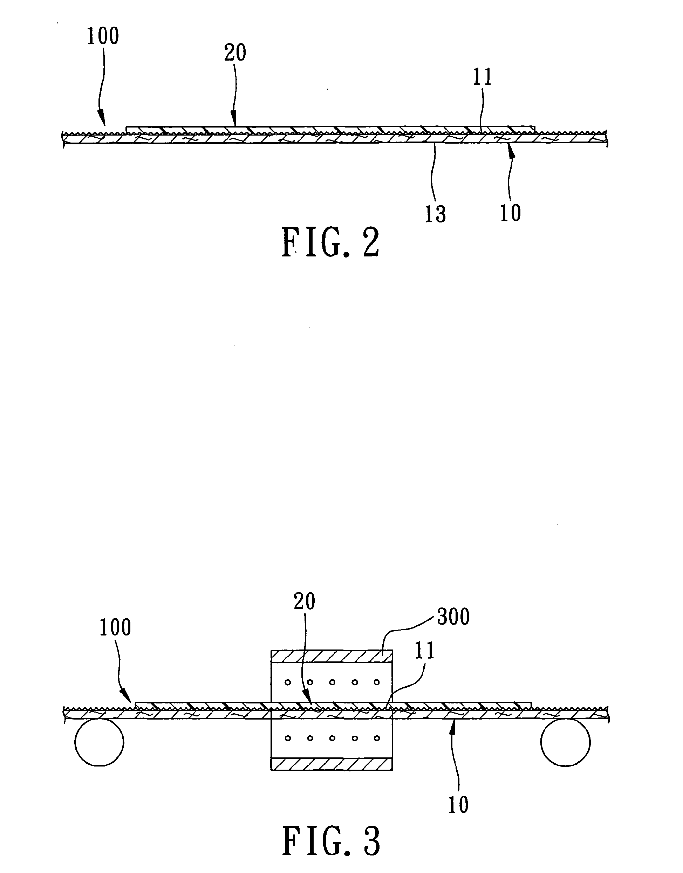

Referring to Fig. 2, in the first embodiment of this invention, the fabric substrate 10 has a rough surface 11 with a coarse texture, and a binding surface 13 that is opposite to the rough surface 11 and that is adapted to be attached to an article. The fabric substrate 10 is made from a thermal-resistant material including, but not limited to, leather, non-woven fabric, toweling, lint, etc. The curable thermosetting resin layer 20 is formed on the rough surface 11 of the fabric substrate 10 so as to form a preformed body 100. Preferably, the curable thermosetting resin layer 20 is formed on the fabric substrate 10 by scraping, coating or printing.

Non-exclusively, the curable thermosetting resin layer 20 is made from a material selected from the group consisting of phenolics, amino plastics, unsaturated polyesters, epoxies, imides, polyurethanes and elastomers. Preferably, the curable thermosetting resin layer 20 is made from silicone rubbers, which are elastomers.

In addition, the curable thermosetting resin layer 20 includes a curing agent selected from the group consisting of high-temperature curing agents and ambient-temperature curing agents.

Referring to Fig. 3, a high-temperature curing agent is used for the curable thermosetting resin layer 20 in this embodiment, and the curable thermosetting resin layer 20 of the preformed body 100 is pre-cured by heating using a heating device 300 for a controlled time period, so as to cause only a portion of the high-temperature curing agent in the curable thermosetting resin layer 20 to undergo the cross-linking reaction and so as to form a cured barrier integral with the fabric substrate 10. More particularly, the cured barrier is leak-resistant and is formed in the interface between the fabric substrate 10 and the curable thermosetting resin layer 20 so as to prevent the uncured thermosetting resin included in the curable thermosetting resin layer 20 from leaking through the fabric substrate 10.

Alternatively, if an ambient-temperature curing agent is used for the curable thermosetting resin layer 20, the curable thermosetting resin layer 20 is pre-cured such that a portion of the ambient-temperature curing agent partially undergoes the cross-linking reaction at ambient temperature.

Referring to Fig. 4, a logo pattern unit 30 is attached to the pre-cured curable thermosetting resin layer 20 of the preformed body 100. The logo pattern unit 30 includes a backing substrate 31 that includes a curable thermosetting resin and that is attached to the pre-cured curable thermosetting resin layer 20 of the preformed body 100, and at least one logo piece 32. The logo pieces 32 are pre-placed in a mold 200. The backing substrate 31 is subsequently laid in the mold 200, and contacts the logo pieces 32.

Non-exclusively, the curable thermosetting resin included in the backing substrate 31 is a material selected from the group consisting of phenolics, amino plastics, unsaturated polyesters, epoxies, imides, polyurethanes, and elastomers. Preferably, the backing substrate 31 is made from silicone rubbers, which are elastomers.

In addition, the backing substrate 31 contains a curing agent selected from the group consisting of high-temperature curing agents and ambient-temperature curing agents.

The assembly of the preformed body 100 and the logo pattern unit 30 is heated to cause the remainder of the high-temperature curing agent in the pre-cured curable thermosetting resin layer 20 and the curing agent contained in the backing substrate 31 to undergo the cross-linking reaction with the curable thermosetting resin in the backing substrate 31. After the high-temperature curing agent in the pre-cured curable thermosetting resin layer 20 and the curing agent contained in the backing substrate 31 have completely undergone the cross-linking reaction, the logo pattern unit 30 is bound to the fabric substrate 10 through the completely cured curable thermosetting resin layer 20. Particularly, the barrier formed in the interface between the curable thermosetting resin layer 20 and the fabric substrate 10 prevents the curable thermosetting resin contained in the backing substrate 31 from leaking through the fabric substrate 10.

Preferably, the heating operation of the assembly of the preformed body 100 and the logo pattern unit 30 is conduced by hot pressing.

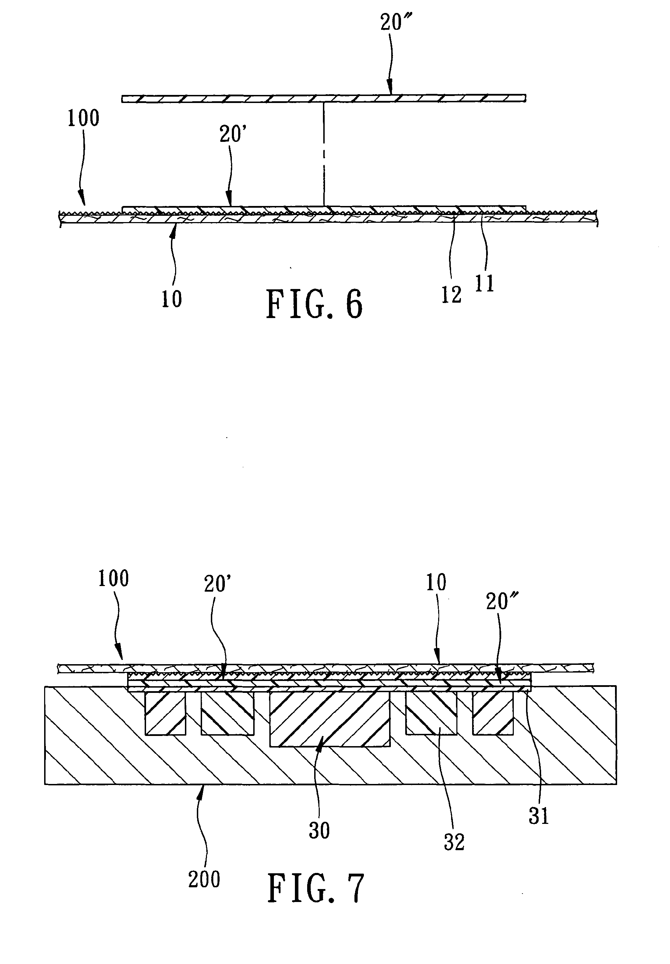

Figs. 6 and 7 illustrate the second preferred embodiment of the method for preparing the logo label according to this invention. The second preferred embodiment of this invention is similar to the first preferred embodiment of this invention illustrated in Figs. 1 to 5, except that the curable thermosetting resin layer 20 is formed by applying a first curable thermosetting resin sub-layer 20' on the fabric substrate 10, and a second curable thermosetting resin sub-layer 20" on the first curable thermosetting resin sub-layer 20". Each of the first and second curable thermosetting resin sub-layers 20', 20" has a curing agent. The curing agent in the first curable thermosetting resin sub-layer 20' has a first concentration, and the curing agent in the second curable thermosetting resin sub-layer 20" has a second concentration lower than the first concentration. The curing agent in the first and second curable thermosetting resin sub-layers 20', 20" is selected from the group consisting of high-temperature curing agents and ambient-temperature curing agents. Preferably, the first concentration ranges from 5 wt% to 10 wt%, based on total weight of the first thermosetting resin sub-layer 20', and the second concentration ranges from 5 wt% to 10 wt%, based on total weight of the second thermosetting resin sub-layer 20".

Since the first concentration is higher than the second concentration, the second concentration requires a curing time longer than that of the first concentration. Therefore, when the curable thermosetting resin layer 20 is pre-cured by heating and controlling the time of heating the curable thermosetting resin layer 20, only the portion of the curing agent that is contained in the first curable thermosetting resin sub-layer 20' undergoes the cross-linking reaction so as to form the cured barrier integral with the fabric substrate 10, and the second curable thermosetting resin sub-layer 20" has the remainder of the curing agent unreacted. Since the cured barrier formed from the first curable thermosetting resin sub-layer 20' integral with the fabric substrate 10 is leak-resistant and is interfaced between the second curable thermosetting resin sub-layer 20" and the fabric substrate 10, the curable thermosetting resin included in the second curable thermosetting resin sub-layer 20" is prevented from leaking through the fabric substrate 10.

When the curable thermosetting resin layer 20 is subsequently heated in combination with the logo pattern unit 30, the remainder of the curing agent that is contained in the second curable thermosetting resin sub-layer20" undergoes the cross-linking reaction with the curable thermosetting resin of the logo pattern unit 30 so as to bind the logo pattern unit to the fabric substrate 10 through the first and second curable thermosetting resin sub-layers 20', 20". Similarly, the barrier formed from the first curable thermosetting resin sub-layer 20' integral with the fabric substrate 10 prevents the curable thermosetting resin contained in the backing substrate 31 from leaking through the fabric substrate 10.

According to the foregoing, the logo label 40 of this invention can be firmly attached to an article by using an adhesive agent. In addition, due to the formation of a leak-resistant barrier in the interface between the curable thermosetting resin layer 20 and the fabric substrate 10, the curable thermosetting resins included in the curable thermosetting resin layer 20 and the backing substrate 31 of the logo pattern unit 30 are prevented from leaking through the fabric substrate 10 during hot pressing, thereby preventing penetration of the releasing agent from the backing substrate 31 into the fabric substrate 10. Since the logo label 40 of this invention not only avoids environmental pollution problems arising from the use of PVC, but also has no substrate limitation for sewing operation, the aforesaid drawbacks as encountered in the prior art can be eliminated.

## Claims

1. A method for preparing a logo label (40), **characterized by** the steps of:
(a) preparing a fabric substrate (10);
(b) forming a curable thermosetting resin layer (20) that contains a curing agent on said fabric substrate (10);
(c) pre-curing said curable thermosetting resin layer (20) to an extent that only a portion of said curing agent undergoes a cross-linking reaction and that said curable thermosetting resin layer (20) forms a cured barrier integral with said fabric substrate (10) ;
(d) attaching a logo pattern unit (30) which includes a curable thermosetting resin to said curable thermosetting resin layer (20); and
(e) heating said curable thermosetting resin layer (20) and said logo pattern unit (30) to cause the remainder of said curing agent to undergo a cross-linking reaction withsaidcurablethermosetting resin of said logo pattern unit (30) so as to bind said logo pattern unit (30) to said fabric substrate (10) through said curable thermosetting resin layer (20) .

2. The method as claimed in claim 1, **characterized in that** said curing agent is a high-temperature curing agent, and said pre-curing operation of step (c) is conducted by heating and controlling the time of heating said curable thermosetting resin layer (20) so as to cause the portion of said curing agent to undergo the cross-linking reaction.

3. The method as claimed in claim 1, **characterized in that** said curing agent is an ambient-temperature curing agent, and said pre-curing operation of step (c) is conducted such that the portion of the curing agent partially undergoes the cross-linking reaction at ambient temperature.

4. The method as claimed in claim 1, **characterized in that** the step (b) includes forming a first curable thermosetting resin sub-layer (20') on said fabric substrate (10) and a second curable thermosetting resin sub-layer (20") on said first curable thermosetting resin sub-layer (20'), each of said first and second curable thermosetting resin sub-layers (20', 20") including said curing agent, said curing agent in said first curable thermosetting resin sub-layer (20') having a first concentration, said curing agent in said second curable thermosetting resin sub-layer (20") having a second concentration lower than the first concentration, said second concentration requiring a curing time longer than that of said first concentration.

5. The method as claimed in claim 4, **characterized in that** the step (c) includes pre-curing said first and second curable thermosetting resin sub-layers (20', 20") by heating and controlling the time of heating so that said second curable thermosetting resin sub-layer (20") has the remainder of said curing agent unreacted.

6. The method as claimed in claim 4, **characterized in that** based on total weight of said first curable thermosetting resin sub-layer (20'), said first concentration ranges from 5 wt% to 10 wt%, and wherein based on total weight of said second thermosetting resin sub-layer (20"), said second concentration ranges from 5 wt% to 10 wt%.

7. The method as claimed in claim 1, **characterized in that** said logo pattern unit (30) includes a backing substrate (31) that is bound to said curable thermosetting resin layer (20) and that contains said thermosetting resin of said logo pattern unit (30).

8. The method as claimed in claim 7, **characterized in that** said curable thermosetting resin layer (20) and said backing substrate (31) of said logo pattern unit (30) are made from silicone rubber.
